Europäisches Patentamt

European Patent Office

Office européen des brevets

(11) Veröffentlichungsnummer: **0 660 132 A1**

## (12) EUROPÄISCHE PATENTANMELDUNG

(21) Anmeldenummer: **94119359.1**

(51) Int. Cl.⁶: **G01S 7/292**

(22) Anmeldetag: **08.12.94**

(30) Priorität: **23.12.93 DE 4344022**

(43) Veröffentlichungstag der Anmeldung:
**28.06.95 Patentblatt 95/26**

(84) Benannte Vertragsstaaten:
**DE FR GB NL SE**

(71) Anmelder: **Daimler-Benz Aerospace
Aktiengesellschaft**

**D-81663 München (DE)**

(72) Erfinder: **Kölle, Hans-Georg, Dipl.-Ing.
Birkenweg 5
D-89188 Merklingen (DE)**
Erfinder: **Wolf, Günter, Dipl.-Ing.
Franz-Wiedemeier-Strasse 101
D-89081 Ulm (DE)**

(74) Vertreter: **Fröhling, Werner Otto, Dr. et al
Daimler-Benz Aerospace AG
Patentabteilung
Sedanstrasse 10
D-89077 Ulm (DE)**

(54) **Digitales Verfahren zur Detektion zeitlich kurzer Pulse und Anordnung zur Durchführung des Verfahrens.**

(57) Die Erfindung betrifft ein digitales Verfahren zur Detektion zeitlich kurzer Pulse. Dabei wird mit Hilfe eines in der Radartechnik geläufigen statistischen Verfahrens ein Schwellwert gebildet, mit dem kurze zu detektierende Pulse unterscheidbar sind von dagegen langen Pulsen.
Die Erfindung betrifft außerdem eine Anordnung zur Durchführung des Verfahrens.

FIG. 2

EP 0 660 132 A1

Die Erfindung geht aus von einem digitalen Verfahren zur Detektion zeitlich kurzer Pulse nach dem Oberbegriff des Patentanspruchs 1 und einer Anordnung zur Durchführung des Verfahrens nach dem Oberbegriff des Patentanspruchs 5.

In der Nachrichtentechnik, insbesondere der Radartechnologie, ist es in vielen Fällen erforderlich, kurze Pulse mit gewisser Längenvariation zu detektieren, das heißt zu erkennen und/oder zu markieren. Dabei sollen die kurzen Pulse auch bei einem möglichst geringen Störspannungsabstand (S/N-Verhältnis) und/oder bei dem Vorhandensein zeitlich langer Pulse zuverlässig erkannt werden.

Es ist naheliegend, zu einer solchen Detektion ein Hochpaßfilter mit einer geeignet gewählten unteren Grenzfrequenz sowie einer nachgeschalteten Schwellwertschaltung, z.B. zur Unterdrückung des Amplitudenrauschens, zu verwenden.

Bei einem solchen Verfahren sind Grenzfrequenz und Schwellwert in nachteiliger Weise lediglich mit einem hohem technischen Aufwand änderbar, insbesondere dann, wenn diese Werte in einem weiten Bereich sowie zeitlich schnell geändert werden müssen.

Dieser Nachteil kann vermieden werden mit einer Filterbank, die mehrere Einzelfilter mit jeweils fest eingestellter Grenzfrequenz enthält, sowie einem gesteuertem Schwellwertschalter mit zugehöriger Steuerschaltung. Ein solches Verfahren ist ebenfalls in nachteiliger Weise technisch aufwendig und daher kostenungünstig.

Der Erfindung liegt die Aufgabe zugrunde, ein gattungsgemäßes Verfahren anzugeben, das eine Auswahl der Pulslängen der zu detektierenden Pulse in weiten Grenzen ermöglicht, weiterhin die gleichzeitige Detektion verschieden langer Kurzpulse mit ein und derselben Parametrisierung des Verfahrens erlaubt und das kostengünstig und zuverlässig durchführbar ist. Der Erfindung liegt außerdem die Aufgabe zugrunde, eine Anordnung zur Durchführung eines solchen Verfahrens anzugeben.

Diese Aufgabe wird gelöst durch die in den kennzeichnenden Teilen der Patentansprüche 1 und 5 angegebenen Merkmale.

Vorteilhafte Ausgestaltungen und/oder Weiterbildungen sind den Unteransprüchen entnehmbar.

Ein erster Vorteil besteht darin, daß das Verfahren mit ein und derselben Einstellung die gleichzeitige Detektierung von verschiedenlangen Kurzpulsen erlaubt.

Ein zweiter Vorteil der Erfindung besteht darin, daß im wesentlichen von einem Takt gesteuerte elektronische Bausteine und/oder Baugruppen verwendet werden. Durch Änderung der Taktfrequenz ist in einem weiten Bereich eine Anpassung an die zu detektierende Pulslänge möglich.

Ein dritter Vorteil besteht darin, daß ansonsten bei einem Filter vorhandene Einschwingzeiten nicht auftreten, so daß eine schnelle Änderung und/oder Anpassung an sich ändernde Parameter, z.B. sich sprunghaft änderndes Amplitudenrauschen, ermöglicht wird.

Ein vierter Vorteil besteht darin, daß der Schwellwert in weiten Grenzen automatisch an die sich ändernde Amplitudenwerte des Rauschens angepaßt wird.

Ein fünfter Vorteil besteht darin, daß die Schaltungsanordnung mit wenigen Baugruppen in integrierter Technologie ausführbar ist, so daß eine leichte, mechanisch robuste, zuverlässige sowie kostengünstige Anordnung möglich ist.

Weitere Vorteile ergeben sich aus der nachfolgenden Beschreibung.

Die Erfindung beruht auf einem Verfahren, das geordnete Statistiken verwendet. Ein solches Verfahren ist aus der Radartechnologie bekannt und wird dort im allgemeinen für sogenannte CFAR-Verfahren ("Constant False Alarm Rate") angewandt. Ein solches Verfahren ist z.B. aus der DE 32 13 430 C2 bekannt.

Es ist nun in überraschender Weise möglich, mit einem solchen Verfahren einen Detektor für Pulse mit einer vorgebbaren maximalen Pulslänge aufzubauen.

Die Erfindung wird im folgenden anhand eines Ausführungsbeispieles unter Bezugnahme auf schematisch dargestellte Figuren näher erläutert. Es zeigen:

FIG. 1 ein Blockbild des Ausführungsbeispiels
FIG. 2 ein Diagramm zur Erläuterung der Erfindung.

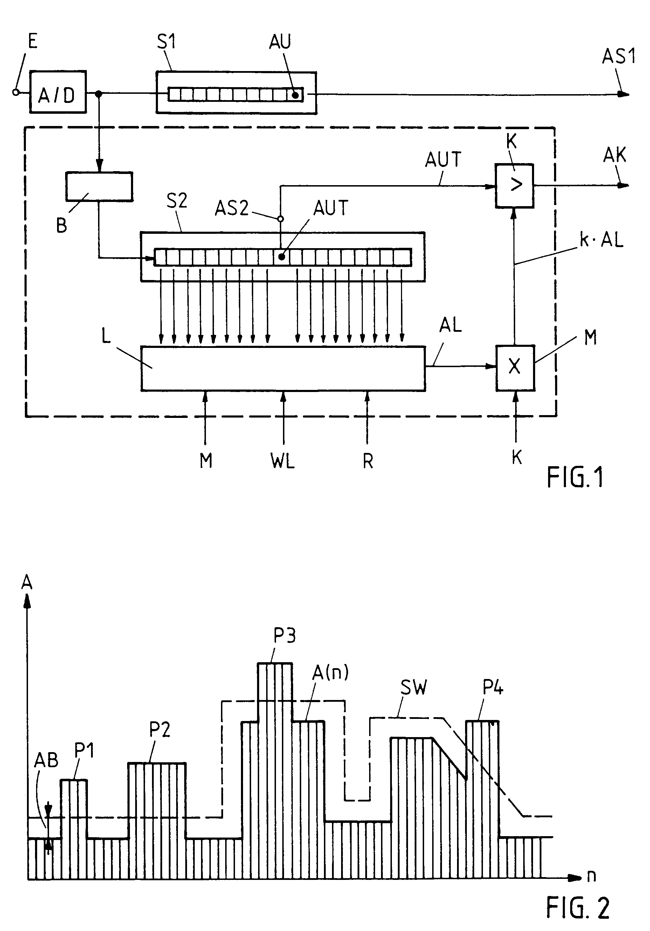

FIG. 1 zeigt eine schematisch dargestellte Schaltungsanordnung, wobei an dem Eingang E eines Analog-/Digital-Wandlers A/D ein komplexes analoges Eingangssignal anliegt. An dem Ausgang des Analog-/Digital-Wandlers A/D entsteht ein zugehöriges digital abgetastetes komplexwertiges Eingangssignal, das vorzugsweise aus zeitlich äquidistanten Abtastwerten besteht. Dabei ist der (Abtast)Takt entsprechend dem Abtasttheorem gewählt. Dieses digitale Eingangssignal gelangt auf ein getaktetes erstes Schieberegister S1, das lediglich aus zeichnerischen Gründen 10-stufig ausgebildet ist und das lediglich als getaktete Verzögerungsleitung wirkt. Bei dem ersten Schieberegister S1 ist in dessen letzter Speicherzelle, der zehnten Stufe, ein sogenanntes Signal unter Test AU anliegend.

Dieses liegt gleichzeitig an am Ausgang, dem ersten Ausgang AS1, des ersten Schieberegisters S1. Bei diesem Signal unter Test AU soll geprüft werden, ob es einem kurzen Puls angehört, der sich über mehrere digitale Abtastwerte erstrecken kann. Diese Prüfung erfolgt mit einer Schaltungsanordnung, die mit einer gestrichelt dargestellten Linie umrahmt ist. Diese Schaltungsanordnung entspricht im wesentlichen derjenigen, die in der DE 32 13 430 C2 beschrieben ist.

In FIG. 1 gelangt das komplexwertige digitale Eingangssignal zunächst auf einen Betragsbildner B, dessen Ausgang mit dem Eingang eines zweiten Schieberegisters S2 verbunden ist. Dieses ist mit demselben Takt getaktet wie der Analog-/Digital-Wandler A/D sowie das erste Schieberegister S1, besitzt jedoch wesentlich mehr Speicherzellen, hier beispielsweise 19. Bei dem zweiten Schieberegister S2 befindet sich dessen Ausgang, der zweite Ausgang AS2, genau an der Speicherzelle, hier der zehnten Speicherzelle, wie bei dem ersten Schieberegister S1. Der zweite Ausgang AS2 ist mit einem ersten Eingang eines Komparators K verbunden.

Die in den Speicherzellen, außer der Ausgangszelle (AS2), des zweiten Schieberegisters S2 gespeicherten (Amplituden)Signale werden in einer Logikschaltung L der Größe nach sortiert, so daß eine Rangfolge entsteht. Ein solches Sortierverfahren ist beispielsweise in der deutschen Patentschrift DE 32 23 565 beschrieben. Jeder Amplitude kann also ein Rang in der Rangfolge, die hier z.B. 18 Ränge umfaßt, zugeordnet werden. Dabei hat beispielsweise die kleinste Amplitude den Rang 1 und die größte Amplitude den Rang 18. Mit Hilfe eines Rangwählers R kann nun in der Logikschaltung L veranlaßt werden, daß an deren Ausgang AL ein dem gewählten Rang, beispielsweise dem Rang 5, entsprechendes Amplituden-Signal ausgegeben wird. Dieses gelangt an einen ersten Eingang eines Multiplikators M, an dessen zweitem Eingang ein Schwellwert-Multiplikator-Si-gnal k (Wichtungsfaktor) anliegt. Das Ausgangssignal (Amplituden-Schwellwert) des Multiplikators M wird einem zweiten Eingang des Komparators K zugeführt. Dieser prüft, ob das (Ausgangs-Amplituden-)Signal AUT (erster Eingang) größer ist als das Signal k•AL (zweiter Eingang). Wenn ja, entsteht am Komparator-Ausgang AK ein Markierungssignal (Flag-Signal). Dieses und das Ausgangssignal AU des ersten Schieberegister S1 sind an den Ausgängen AK sowie AS1 gleichzeitig vorhanden. Dabei kann ein zu detektierender Puls aus mehreren Abtastwerten bestehen. Das Signal k•AL bestimmt einen (Amplituden-)Schwellwert SW, dessen zeitlicher Verlauf in FIG. 2 gestrichelt dargestellt ist, was nachfolgend noch näher erläutert wird.

In FIG. 1 besitzt die Logikschaltung L weitere Eingänge WL sowie M. Mit dem Eingang WL (Fensterlänge) kann die Anzahl der tatsächlich berücksichtigten Speicherzellen in dem zweiten Schieberegister S2 gewählt werden, also eine Anzahl, die kleiner ist als die maximale Anzahl (hier: 18) der möglichen Speicherzellen zur Bestimmung der Rangfolge.

Mit Hilfe des Einganges WL kann also ein (Speicherzellen)Fenster gebildet werden, das bezüglich der (Ausgangs)Zelle AS2 mit Hilfe des Einganges M (Masking) verschoben oder ausgedünnt werden kann. Damit ist es z.B. möglich, das Fenster so zu legen, daß die (Ausgangs-)Zelle AS2 nicht in der Mitte des Fensters liegt und die Zelle unter Test AUT z.B. nicht im Sortierverfahren berücksichtigt werden braucht.

FIG. 2 zeigt ein exemplarisches Betrags-Eingangssignal, das am Ausgang des Betragsbildners B (FIG. 1) anliegt. Dabei ist der Amplitudenwert A in Abhängigkeit von der Nummer n des Abtastwertes aufgetragen. Da die Abtastwerte zeitlich äquidistant ermittelt werden, kann die Abszisse auch als Zeitachse betrachtet werden. Der von der digitalen Zeit n abhängige Amplitudenverlauf A(n) kann aufgefaßt werden als eine Überlagerung von Rauschen und/oder zeitlich langen Pulsen mit zeitlich kurzen und mittellangen Pulsen P1 bis P4, die detektiert werden sollen.

Es ist nun in überraschender Weise möglich, die Parameter Schwellwert-Multiplikator k, Rang R, Fensterlänge WL, Maskierung M derart zu wählen, daß der zeitliche Verlauf des Schwellwertsignales SW = k•AL den gestrichelt dargestellten Verlauf besitzt. Dieser zeichnet sich dadurch aus, daß immer ein bestimm- und einstellbarer Abstand AB zu dem Rauschen und zu den langen Pulsen eingehalten wird und daß der zeitliche Verlauf des Schwellwertsignales SW demjenigen des Rauschens und der langen Pulse entspricht. Bei einem solchen Schwellwertsignal SW sind die kurzen Pulse P1 und mittellangen Pulse P2 bis P4 zuverlässig dadurch detektierbar, daß zu jedem Abtastwert unter Test AU an dem Komparatorausgang AK ein zugehöriges Markierungssignal (Flag-Signal) entsteht.

Die vorstehend erwähnten Parameter k, R, WL, M sowie die Anzahl der Speicherzellen in den Schieberegistern S1, S2 und die für diese verwendete Taktfrequenz sind z.B. experimentell anpaßbar an ein zu erwartendes Eingangssignal, z.B. ein Radarsignal.

Für dieses Ausführungsbeispiel gelten die Formeln

$2 \leq W \leq N$ und $1 \leq P \leq W/2$.

Dabei bedeuten
N = maximale Anzahl der Speicherzellen des zweiten Schieberegister S2
W = Anzahl der in einem Fenster enthaltenen Speicherzellen

P =     Länge eines kurzen, zu detektierenden Pulses (in Einheiten von Speicherzellen = Anzahl der Abtastwerte eines Pulses).

Es ist ersichtlich, daß die detektierbaren zeitlichen Längen eines Pulses P gegeben sind durch

$$\frac{1}{F_{takt}} \leq P = \frac{W/2}{F_{takt}}$$

mit: $F_{takt}$ = Taktfrequenz.

Ein solcher Detektor für kurze Pulse, der auch SPD (Short Pulse Detector) genannt wird, ist in vielen Gebieten der Nachrichtentechnik einsetzbar, beispielsweise in der Radartechnik zur Zielerkennung (kurzer Puls P mit variabler Länge) in der Umgebung von Clutter.

Die Erfindung ist nicht auf das beschriebene Ausführungsbeispiel beschränkt, sondern sinngemäß auf weitere anwendbar, beispielsweise zur Detektion kurzer Störpulse aber mit variabler Länge (sogenannter Glitches) in einer Pulsfolge, deren (Nutz-)Pulse dann als lange Pulse zu betrachten sind.

Derartige exemplarische Anwendungsfälle sind in der folgenden Tabelle zusammengestellt:

| zu detektierender kurzer und/oder mittlerer Puls | nicht zu detektierender langer Puls |
|---|---|
| Störpuls | Nutzpuls |
| Ziel | Clutter |
| Nutzpuls | Störpuls/Störumgebung |
| Fremdpuls | Eigenpuls |
| Eigenpuls | Fremdpuls. |

## Patentansprüche

1. Digitales Verfahren zur Detektion zeitlich kurzer Pulse, wobei
   - lediglich die Pulse, deren Pulslänge kleiner ist als ein zugehöriger vorgebbarer Pulslängen-Schwellwert, und
   - lediglich die Pulse, deren Pulshöhe größer ist als ein zugehöriger vorgebbarer Amplituden-Schwellwert, ermittelt werden, dadurch gekennzeichnet,
   - daß eine vorgebbare Anzahl zeitlich aufeinanderfolgender Abtastwerte entsprechend der Größe sortiert werden, so daß eine Rangfolge entsteht,
   - daß in der Rangfolge zu einem vorgebbaren Rang die zugehörige Abtastwertgröße ermittelt wird,
   - daß die ermittelte Abtastwertgröße (Amplitude) mit einem vorgebbarem Wichtungsfaktor (k) multipliziert wird, so daß der Amplituden-Schwellwert entsteht und
   - daß alle Abtastwerte, deren Amplitude größer ist als der Schwellwert (SW) gekennzeichnet werden.

2. Verfahren nach Anspruch 1, dadurch gekennzeichnet, daß zur Bildung des Schwellwertes (SW)
   - zeitlich fortlaufend eine vorgebbare Anzahl (N) von Amplitudenwerten in einem getakteten Speicher (S2) gespeichert werden,
   - aus den gespeicherten Amplitudenwerten ein Amplitudenwert unter Test (AUT) ausgewählt wird und
   - aus den übrigen Amplitudenwerten die Rangfolge ermittelt wird.

3. Verfahren nach Anspruch 2, dadurch gekennzeichnet,
   - daß der getaktete Speicher (S2) eine vorgebbare Anzahl (N) von möglichen Speicherplätzen zur Speicherung von Amplitudenwerten enthält,
   - daß mehrere der Speicherplätze zu ein Fenster mit einer Fensterlänge W kleiner N zusammmge-faßt werden und

4

- daß die Lage des Fensters, bezüglich des Amplitudenwertes unter Test (AUT), dessen Fensterlänge sowie die Auswahl der Werte aus dem Fenster (Masking) in Abhängigkeit von den zu detektierenden kurzen Pulsen (P) und/oder von dem digitalen Eingangssignal gewählt werden.

4. Verfahren nach einem der vorhergehenden Ansprüche, dadurch gekennzeichnet,
   - daß in einer getakteten Verzögerungsleitung (S1) das komplexwertige Eingangssignal bis zum Signal unter Test (AU) verzögert wird,
   - daß der zu dem Signal unter Test (AU) gehörende Amplitudenwert unter Test (AUT) mit einem zugehörigem Schwellwert (SW) verglichen wird und
   - daß bei einem Überschreiten des Schwellwertes (SW) das Signal unter Test (AU) markiert wird durch ein Markierungssignal (Flag).

5. Anordnung zur Durchführung des Verfahrens nach einem der vorhergehenden Ansprüche, dadurch gekennzeichnet, daß der getaktete Speicher (S2) zur Ermittlung der Rangfolge sowie die getaktete Verzögerungsleitung (S1) als getaktete Schieberegister ausgebildet sind.

6. Anordnung nach Anspruch 5, dadurch gekennzeichnet, daß der getaktete Speicher (S2) mindestens zweimal soviele Speicherplätze besitzt wie die getaktete Verzögerungsleitung (S1).

7. Anordnung nach Anspruch 5 oder Anspruch 6, dadurch gekennzeichnet, daß dem getakteten Speicher (S2) ein Betragsbildner (B), in dem aus komplexwertigen Eingangssignalen zugehörige (Amplituden-)Betragssignale erzeugt werden, vorgeschaltet ist.

FIG.1

FIG. 2

Europäisches
Patentamt

**EUROPÄISCHER RECHERCHENBERICHT**

Nummer der Anmeldung

EP 94 11 9359

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO-A-90 00772 (HUGHES AIRCRAFT COMPANY)<br>* Zusammenfassung; Abbildungen 1,4 *<br>* Seite 10, Zeile 6 - Zeile 17 *<br>--- | 1 | G01S7/292 |
| A | US-A-4 213 127 (COLE)<br>* Zusammenfassung; Abbildung 1 *<br>* Spalte 2, Zeile 19 - Zeile 43 *<br>--- | 1 | |
| A | EP-A-0 036 751 (THE MARCONI COMPANY LTD.)<br>* das ganze Dokument *<br>--- | | |
| A | FR-A-2 524 983 (LICENTIA PATENT-VERWALTUNGS-GMBH.)<br>* das ganze Dokument * | | |
| D | & DE-A-3213430(LICENTIA PATENT-VERWALTUNGS-GMBH.<br>----- | | |
| | | | **RECHERCHIERTE SACHGEBIETE (Int.Cl.6)**<br>G01S |

Der vorliegende Recherchenbericht wurde für alle Patentansprüche erstellt

| Recherchenort | Abschlußdatum der Recherche | Prüfer |
|---|---|---|
| BERLIN | 8. März 1995 | Danielidis, S |

EPO FORM 1503 03.82 (P04C03)